(19) **Europäisches Patentamt**
**European Patent Office**
**Office européen des brevets**

(11) **EP 2 604 124 A1**

(12) **EUROPEAN PATENT APPLICATION**

(43) Date of publication:
**19.06.2013 Bulletin 2013/25**

(51) Int Cl.:
*A23C 11/00* (2006.01)    *A23C 11/08* (2006.01)
*A23L 1/00* (2006.01)

(21) Application number: **11193949.2**

(22) Date of filing: **16.12.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Nestec S.A.**
**1800 Vevey (CH)**

(72) Inventors:
• **Leuenberger, Ursula**
**CH-3600 THUN (CH)**

• **Schmied, Christian**
**3510 KONOLFINGEN (CH)**
• **Zeltner, Peter**
**3048 WORBLAUFEN (CH)**

(74) Representative: **Cogniat, Eric Jean Marie et al**
**Nestec S.A.**
**IP Department**
**Av. Nestlé 55**
**1800 Vevey (CH)**

(54) **Soluble non-dairy creamer tablet surface-treated with carbohydrate**

(57)    The present invention relates to a method for the manufacture of soluble non-dairy creamer tablets and in particular to non-dairy creamer tablets surface-treated with a carbohydrate. The invention also relates to the use of a concentrated carbohydrate solution to reduce a friability of a non-dairy creamer tablet. The soluble non-dairy creamer tablet surface-treated with the carbohydrate has applications in the beverage industry.

**EP 2 604 124 A1**

**Description**

**Field of invention**

The present invention relates to a method for the manufacture of soluble non-dairy creamer tablets and in particular to soluble non-dairy creamer tablets surface-treated with a carbohydrate.

**Background of the invention**

Non-dairy creamer powders are used extensively in beverages such as coffee and tea. The non-dairy creamer powders are used as a substitute for fresh milk in the beverages.

The non-dairy creamer powders have a long shelf-life in comparison to fresh milk because most of the moisture for microbial growth is removed. The removal of moisture results in a porous non-dairy creamer powder that readily dissolves in the beverages.

Non-dairy creamer powders are stored in containers and need to be spooned into the beverages. A drawback of non-dairy creamer powders is that they are not readily transportable and not useful for "on-the-go" situations. Non-dairy creamer tablets however address some of the shortcoming of non-dairy creamer powders.

EP 1 048 216 discloses a method for the manufacture of a densified milk product i.e milk-based tablets.

EP 1 769 682 discloses a solid milk product and a method for the manufacture of the solid milk product. In particular a solid milk product in which a porosity of the solid milk product is controlled so that the solid milk product has a preferred solubility, a preferred strength and in which fat float-off is avoided when the solid milk product it is added to a beverage.

WO 2007/077970 discloses a solid milk product and a method for the manufacture of the solid milk product. In particular a solid milk product in which a porosity of the solid milk product is controlled so that the solid milk product has a preferred solubility, a preferred strength and in which fat float-off is avoided when the solid milk product is added to a beverage.

EP 0 169 319 relates, *inter alia,* to food tablet coated on its exterior surfaces with maltodextrin, in order to mask the taste of the table ingredient and does not have a slimy taste. The objective achieved according to this document is to avoid contact between the tablet ingredient and the taste buds. This document does not discuss dissolution of the tablet into water, prior to consumption of the product.

Non-dairy creamer tablets such as those described in the prior art are friable substances. This means that the non-dairy creamer tablets can be easily reduced to their constituent non-dairy creamer powders by an action of pressure or friction on the non-dairy creamer tablet. Therefore the non-dairy creamer tablets of the prior art are cumbersome to handle and very easily damaged. The non-dairy creamer tablets of the prior art need special packaging and special handling to prevent them from becoming damaged and forming their constituent non-dairy creamer powders.

There is a need to reduce a friability of non-dairy creamer tablets whilst retaining the physical properties such as a dissolution rate, strength and flavour of the non-dairy creamer tablets.

There is a need to overcome at least some of the problems associated with the prior art.

**Summary of invention**

In a first aspect the present invention relates to a method for the manufacture of a soluble non-dairy creamer tablet, in particular a soluble non-dairy creamer tablet that has been surface-treated with carbohydrate.

In a further aspect the present invention relates to a soluble non-dairy creamer tablet surface-treated with a carbohydrate.

In a further aspect the present invention relates to a container comprising at least one soluble non-dairy creamer tablet surface-treated with a carbohydrate.

In a further aspect the present invention relates to a use of a carbohydrate for reducing a friability of a soluble non-dairy creamer tablet.

**Detailed description of invention**

The present inventors have found that a surface treatment of a soluble non-dairy creamer tablet according to the present invention provides robust tablet for packaging, handling while providing good dissolution behaviours in liquid and with use of standard compression equipment.

A non-dairy creamer tablet as described herein refers to a non-dairy creamer powder that has been densified and molded into a form. Within the context of the invention, "non-dairy creamer powder" and "non-dairy creamer tablet" mean respectively a powder and a tablet that comprise one or several components, such as proteins, including caseins and derivatives, carbohydrates, including lactose, or fats, that can be used as a milk substitute. Said components may be derived from milk.

As used herein, "soluble" non-dairy creamer tablet refers to the fact that the tablet can dissolve rapidly in an aqueous medium such as water, milk, fruit juice, coffee, tea, or other beverages, for consumption at cold, ambient, warm or hot temperatures (i.e. from a few °C to about 90°C). The reconstitution time of the soluble non-dairy creamer tablet in an aqueous medium is preferably between 15 and 120 sec.

Densification refers to a compression, a compaction, a granulation, a spheronisation or any other procedure for reducing a volume of the non-dairy creamer powder by a certain percentage by compressing the non-dairy creamer powder. Densification (or degree of compaction) is a measure of a reduction in a volume of the non-dairy creamer powder compared with a volume of the non-dairy creamer tablet.

A method for the manufacture of the soluble non-dairy creamer tablet surface-treated with a carbohydrate is described below.

In a first step a wet agglomeration of a non-dairy creamer powder is formed. The non-dairy creamer powder can be obtained by spraydrying, freeze-drying or any other procedure of drying known in the art. The non-dairy creamer powder can have a particle size of about 100 to about 4000 microns, preferably 500 to 3000 microns, and most preferably about 1000 to 2000 microns. The powder creamer can be bed dried, spray dried, freeze dried, agglomerated, or prepared in accordance with other techniques as known in the art. For example, the powder creamer of the invention can be made by spray drying of 60-80% (w/w) liquid feed and contain up to about 5% of moisture in the final products.

The non-dairy creamer powder can include several components, such as a sweetener component, a protein component and an oil or fat component, as disclosed in WO 98/07329 A1 for instance. The non-dairy creamer can also be low-protein or without protein, as disclosed in WO 2010/040727 A1 for instance.

The sweetener component may be any suitable food grade sweetener; for example those conventionally used in the production of powdered creamers. Examples of suitable sweeteners are sugars such as corn syrup, sucrose, dextrose, fructose, maltodextrin, and the like, and mixtures of these sugars. Corn syrup is particularly suitable (especially dried corn syrup solids) since corn syrup adds bulk to the powdered creamer without imparting excessive sweetness. Maltodextrin, either alone or in combination with other sugars, may also be used; particularly if a product having less sweetness is desired. In any event, the particular sweetener or combination of sweeteners selected is not critical; the primary determining factors being the desired taste, sweetness and bulk. The amount of sweetener used will vary depending upon the sweetener, the desired level of sweetness and the strength of the sweetener; but preferably comprises about 30 to about 70% by weight of the powdered creamer.

The sweetener component may also contain artificial sweeteners such as saccharin, cyclamates, acetosulfame, L-aspartyl based sweeteners such as aspartame, and mixtures of these. If an artificial sweetener is used, it is suitably combined with bulking agents such as maltodextrins and polydextrose. In this case, the total amount of sweetener and bulking agent is usually in the range of about 40 to about 70% by weight; artificial sweetener itself usually comprising less than 1% by weight.

The protein component may be selected from any suitable water-dispersible or soluble protein; for example those normally used in powdered creamers. Examples of such proteins are soy protein, non-fat milk solids, whey solids, casein salts such as sodium and calcium caseinate, rice protein, wheat protein, oat protein, and the like. Mixtures of the various proteins may also be used. Sodium caseinate is most commonly used. The protein is preferably present in an amount up to about 6% by weight; for example about 0.5% to about 6% by weight. If the protein source is not pure protein, a greater amount of the protein source may be required to obtain the desired protein level.

The oil or fat component may be any suitable oil which is stable, bland in flavour, and which has a melting point below about 100C. The edible oil may also be hydrogenated. Particularly suitable are vegetable oils which have high levels of mono-unsaturates; for example vegetable oils in which the fatty acid moieties in the triglyceride comprise at least about 70% by weight of oleic acid and less than about 20% by weight of linoleic acid. Especially preferred are vegetable oils in which the fatty acid moieties in the triglyceride comprise at least about 80% by weight of oleic acid and the mass ratio of oleic acid to linoleic acid is about 1:0.01 to about 1:0.09. The edible oil is preferable present in an amount of about 25% to about 45% by weight of the powdered creamer.

For instance, the non-dairy powder creamer may contain from about 0.1 to 50 wt% of fats or vegetable oil(s). The vegetable oil(s) may comprise partially or wholly hydrogenated oils, alone or in combination. The oils can include but are not limited to soybean oil, coconut oil, palm oil, palm kernel oil, cotton seed oil, canola oil, olive oil, sunflower oil, safflower oil and other oils, or a combination thereof.

The non-dairy creamer powder can also include a milk powder derived from a whole milk powder, a partially skimmed milk powder, a skimmed milk powder, a filled milk powder, an adapted milk powder a cream powder or a coffee enhancer. The non-dairy creamer powder can also be a combination of a non-dairy milk powder milk powder with cocoa, chocolate, coffee and milk powder or mixtures thereof.

A total fat content of the non-dairy creamer tablet is preferably between 15 and 40%. The fat can be milk fat, endogenous fat, vegetable fat or animal fats or the fat can be any combinations thereof. The whole milk powder is milk powder that contains 26 % fat or more. The partially skimmed milk powder is milk powder that contains between 1.5 and 26 % fat. The skimmed milk powder is milk powder with less than 1.5 % fat. The filled milk powder is the skimmed milk powder with additional vegetable fat. By non-dairy milk powder it is meant a partially or totally synthetic milk powder, for example but limited to a coffee whitener.

The wet agglomeration of the non-dairy creamer powder is carried out by applying a liquid to wet the non-dairy creamer powder. The liquid may be applied to wet the non-dairy creamer powder by the use of nozzles that spray the liquid onto the non-dairy creamer powder. The liquid is usually demineralised water and can also be a solution of sugars, colorants and flavourings in the demineralised water or an emulsion such as reconstituted milk-based. The liquid may also include some additives.

The additives can be a binding agent, a stabilising agent, an emulsifying agent, probiotics and a wetting agent or any mixtures thereof. The binding agent can be for example a maltodextrin, such as a glucose syrup, a caseinate, an alginate or a carragheenan. The stabilising agent can be for example an alginate or a carragheenan. The emulsifying agent can be for example a lecithin, a caseinate or a glycerolester. The amount of the additives in the non-dairy creamer tablet is between 0 and 10 %.

The wet agglomeration of the non-dairy creamer powder results a wet agglomerate of the non-dairy creamer powder with a moisture content of between 3 and 10%, preferably the wet agglomerate of the non-dairy creamer powder has a moisture content of between 4 and 8%.

The wet agglomeration of the non-dairy creamer powder can be carried out using an apparatus known in the art, for example, a drum or a fluidised bed.

In a second step the wet agglomerate of the non-dairy creamer powder can be sieved with a sieving device to form a sieved wet agglomerate of the non-dairy creamer powder. A diameter of a mesh opening of the sieving device is preferably between 0.5 and 3 mm. It is most preferable that a diameter of the mesh opening of the sieving device is 2 mm.

In a third step the sieved wet agglomerate of the non-dairy creamer powder can be fed into a tabletting machine for compaction.

In fourth step the wet agglomerate of the non-dairy creamer powder is compacted to form the soluble non-dairy creamer tablet. The compaction is a two step process:

- a pre-compaction step wherein the wet agglomerate of the non-dairy creamer powder can be first compacted at a force of between 0.2 and 0.6 kN.
- A main-compaction step where the wet agglomerate of the non-dairy creamer powder is then compacted at a force of between 1 and 10 kN.

Typically, throughput ranges from 600-1200 tablets/ minute. Residence time under pressure is an important factor and must be adjusted as known in the art so that the compacted tablets have the required hardness (10 - 30N). As mentioned the compaction or densification is either carried out as a compression, a compaction or using any other device for reducing the volume of the wet agglomerate of the non-dairy creamer powder by a certain percentage. A device used for this compaction or densification can be for example a modified tabletting machine, a compacting machine as known in the art.

In a further step a drying of soluble non-dairy creamer tablet is performed. The drying is carried out by for example in an oven, using convection currents or in a vacuum. Following the drying step a moisture content of soluble non-dairy creamer tablet should be less than 4.0%, more preferably less than 3.0%.

At the end of the drying step, a surface treatment of the soluble non-dairy creamer tablet is carried out to form the soluble non-dairy creamer tablet surface-treated with the carbohydrate. A concentrated solution of carbohydrates is applied to the surface of the soluble non-dairy creamer tablet. In a preferred embodiment, mono and disaccharides are used. Sucrose, maltodextrin, glucose syrup are particularly preferred.

It is preferable that the concentrated carbohydrate solution has a dry matter of at least 20%, preferably between 20 and 80% dry matter, more preferably from 40 to 80%, even more preferably from 50 to 80%.

Additional functional ingredients can be added to the concentrated carbohydrate solution. The functional ingredient may be chosen among the list consisting of probiotic bacterium, prebiotic, vitamin, enzyme, antioxidant, mineral salt, amino-acid supplement, peptide, protein, gum, carbohydrate, phytochemical, dextrose, lecithin, other trace nutrient, botanical extract, flavours, aroma, fatty acid, oat beta glucan or other functional fibre, creatine, carnitine, bicarbonate, citrate, caffeine or any mixture thereof.

There are a variety of probiotic microorganisms which are suitable, in particular, having regard to activation of the immune system, prevention of the bacterial overgrowth by pathogens, prevention of diarrhoea and/or restoration of intestinal flora, for example. Probiotic microorganisms include yeast such as Bifidobacterium, Lactobacillus, Streptococcus, Saccharomyces. Preferably, the microorganism is in a spray dried or freeze-dried form.

More preferably, said probiotic bacterium may be selected from the group consisting of Lactobacillus johnsonii, Lactobacillus paracasei, Bifidobacterium longum, Bifidobacterium adolescentis, and Bifidobacterium lactis.

The amount of probiotics may vary according to the specific needs. However, in a preferred embodiment, the amount of lactic acid bacterium in one soluble non-dairy creamer tablet is 10E2 to 10E12 count/gram, more preferably from 10E7 to 10E1l count/gram, even more preferably 10E8 to 10E1 count/gram. The amount per gram of bacterium in one product is preferably determined upon the recommended daily dosage based on the number of products to be consumed per day.

The functional ingredient may preferably be (micro) encapsulated in order to increase its stability and maintain its viability. (Micro) encapsulation means the incorporation of the functional ingredients in small (micro) capsules by various known techniques such as spray drying, spray chilling or spray cooling, extrusion coating, fludised bed coating, liposome entrapment, coacervation, inclusion complexation, centrifugal extrusion and rotational suspension separation. The encapsulating material may be any one or more among the following list: fats, starches, dextrins, alginates, proteins, and lipids. The encapsulation of the functional ingredient (s) may also provide the advantage to delay the release of the functional ingredient and/or to gradually release the functional ingredient (s) along an extensive period of time in the digestives sites; i. e., the mouth and/or gut.

Optionally, the soluble non-dairy creamer tablet surface-treated with the carbohydrate is then dried and/ or cooled. The drying is carried out by for example in an oven, using convection currents or in a vacuum. The soluble non-dairy creamer tablet surface-treated with the carbohydrate may then be cooled to ambient temperature.

The manufactured soluble non-dairy creamer tablet surface-treated with the carbohydrate can then be packaged in a suitable container. The container can be, for example, a stick pack (blister pack) that allows the dispersion of individual non-dairy creamer tablets surface-treated with the carbohydrate, the container can also be a jar.

It is observed that the non-dairy creamer tablets surface-treated with the carbohydrate according to the present invention are less friable. The friability of non-dairy creamer tablets not surface-treated with carbohydrate have a high friability of more than 20%. The non-dairy creamer tablets surface-treated with carbohydrate have a significantly reduced friability of about 15 to 10%, preferably less than 10%.

The surface treatment with the carbohydrate has no effect on a dissolution profile of the non-dairy creamer tablet surface-treated with a carbohydrate compared to a non-dairy creamer tablet non surface-treated with the carbohydrate as shown in the examples.

The reconstitution time of the soluble non-dairy creamer tablet in an aqueous medium is preferably between 15 and 120 sec. The reconstitution time depends on three factors. The three factors are a sinking time, a disintegration time and a dissolution time. The reconstitution time is measured by dissolving the non-dairy creamer tablet in an aqueous medium at a specific temperature. The specific temperature depends on the type of non-dairy creamer powder used in the non-dairy creamer tablet; for example, with a skimmed milk powder, a temperature of the aqueous medium is 20 °C; with a whole milk powder, a temperature of the aqueous medium is 40 °C and with a non-dairy creamer, a temperature of the aqueous medium is 70 °C. The dissolution time is the time taken for the non-dairy creamer tablet to dissolve in the aqueous medium. The dissolution time is preferably between 0 and 10 sec. The dissolution time is very important in the beverage industry.

The non-dairy creamer tablet has a breaking strength between 20 and 250 Newtons and preferably between 35 and 180 Newtons, to ensure that it will not disintegrate into a powder of its constituents for example by handling and transportation.

Examples

The loose density and the absolute density of the non-dairy creamer tablet were measured using a Micromeritics Accupyc 1330 - gas pycnometer and Geopyc. The loose density refers to a measure of a weight of the non-dairy creamer powder with air, per volume of the non-dairy creamer powder.

$$1 - \frac{Envelope\ density}{Tablet\ density}$$

Envelope density = Density of the whole tablet and its pores (g/cm3)
Tablet density = Absolute density of the whole tablet (g/cm3)

The breaking strength of the non-dairy creamer tablet was measured with a Caleva Tablet hardness tester (portable).

The wet agglomeration of the non-dairy creamer powder was carried out using a fluidised bed from Glatt.

The tabletting machine for forming the non-dairy creamer tablet was a Röltgen Flexitab single punch press or a Kilian KTS1000 double punch press.

The non-dairy creamer tablet surface-treated with carbohydrate were analysed with a Micromeritics Accupyc 1330 gas pycnometer and Geopyc.

**Example 1 Surface treatment of milk tablet**

Carbohydrate solutions were prepared for surface-treating the non-dairy creamer tablets. The carbohydrate solutions were:

- Sucrose solutions containing 50% dry matter sucrose.
- Maltodextrin solutions containing 50% dry matter maltodextrin DE 29.

Composition Base powder:

Table 1

|  | Base powder A: | Base Powder B: | Base Powder C: |
|---|---|---|---|
| Malto-Dextrine | 57 | 51 | 59 |
| Vegetable Fat | 34 | 35 | 33 |
| Caseinate | 2.5 | 1.4 | 2.3 |
| Stabilizers | 2.6 | 2.3 | 1.9 |
| Emulsifiers | 0.5 | 1 | 0.5 |
| Sucrose |  | 7 |  |
|  |  |  |  |

Surface-treating non-dairy creamer tablets with sucrose

Non-dairy creamer tablets made of coffee whitener base A or B (Table 1, Base powder A or B) were sprayed with sucrose solutions (50% dry matter sucrose) as shown in tables 2 below.

Table 2a

| Trial 1 | Coffee whitener base A & sucrose solution 50% ; Residence time 18 sec | | | | | | | | | |
|---|---|---|---|---|---|---|---|---|---|---|
| Tablet | 1 | 2 | 3 | 4 | 5 | 6 | 7 | 8 | 9 | 10 |
| Weight g | 3.18 | 3.16 | 3.18 | 3.18 | 3.18 | 3.19 | 3.17 | 3.18 | 3.18 | 3.18 |
| Weight aft. drying | 3.20 | 3.19 | 3.21 | 3.20 | 3.21 | 3.22 | 3.20 | 3.20 | 3.20 | 3.20 |
| coating | 0.02 | 0.03 | 0.03 | 0.02 | 0.03 | 0.03 | 0.03 | 0.02 | 0.02 | 0.02 |

Table 2b

| Trial 2 | Coffee whitener base A & sucrose solution 50% ; Residence time 23 sec | | | | | | | | | |
|---|---|---|---|---|---|---|---|---|---|---|
| Tablet | 1 | 2 | 3 | 4 | 5 | 6 | 7 | 8 |  |  |
| Weight g | 3.19 | 3.19 | 3.25 | 3.16 | 3.18 | 3.17 | 3.22 | 3.19 |  |  |
| Weight aft. drying | 3.21 | 3.22 | 3.27 | 3.20 | 3.21 | 3.19 | 3.25 | 3.21 |  |  |
| coating | 0.02 | 0.03 | 0.02 | 0.04 | 0.03 | 0.02 | 0.03 | 0.02 |  |  |

Table 2c

| Trial 3 | Coffee whitener base B & sucrose solution 50% ; Residence time 23 sec | | | | | | | | | |
|---|---|---|---|---|---|---|---|---|---|---|
| Tablet | 1 | 2 | 3 | 4 | 5 | 6 | 7 | 8 | 9 | 10 |
| Weight g | 3.21 | 3.24 | 3.19 | 3.23 | 3.21 | 3.21 | 3.22 | 3.24 | 3.21 | 3.25 |

(continued)

| Trial 3 | Coffee whitener base B & sucrose solution 50% ; Residence time 23 sec | | | | | | | | | |
|---|---|---|---|---|---|---|---|---|---|---|
| Tablet | 1 | 2 | 3 | 4 | 5 | 6 | 7 | 8 | 9 | 10 |
| Weight aft. drying | 3.25 | 3.27 | 3.22 | 3.26 | 3.24 | 3.23 | 3.25 | 3.26 | 3.24 | 3.21 |
| coating | 0.04 | 0.03 | 0.03 | 0.03 | 0.03 | 0.02 | 0.03 | 0.02 | 0.03 | 0.03 |

Table 2d

| Trial 4 | Coffee whitener base B & sucrose solution 50% ; Residence time 30 sec | | | | | | | | | |
|---|---|---|---|---|---|---|---|---|---|---|
| Tablet | 1 | 2 | 3 | 4 | 5 | 6 | 7 | 8 | 9 | 10 |
| Weight g | 3.20 | 3.21 | 3.22 | 3.21 | 3.23 | 3.19 | 3.22 | 3.26 | 3.24 | 3.24 |
| Weight aft. drying | 3.24 | 3.26 | 3.25 | 3.26 | 3.26 | 3.23 | 3.26 | 3.31 | 3.28 | 3.28 |
| coating | 0.04 | 0.05 | 0.03 | 0.05 | 0.03 | 0.04 | 0.04 | 0.05 | 0.04 | 0.04 |
| Typical mass uptake for Base A 0.02-0.03g (=<1%)<br>Typical mass uptake for Base B 0.02-0.03g (=1-1.3%) | | | | | | | | | | |

Surface-treating non-dairy creamer tablets with maltodextrin

Soluble non-dairy creamer tablets made of coffee whitener base A or B (Table 1, Base powder A or B) were sprayed with maltodextrin solution (50% dry matter maltodextrin) as shown in tables 3 below.

Table 3a

| Trial 5 | Coffee whitener base A & MD DE29 solution 50% ; Residence time 18sec | | | | | | | | | |
|---|---|---|---|---|---|---|---|---|---|---|
| Tablet | 1 | 2 | 3 | 4 | 5 | 6 | 7 | 8 | 9 | 10 |
| Weight g | 3.18 | 3.20 | 3.20 | 3.19 | 3.17 | 3.18 | 3.18 | 3.20 | 3.16 | 3.18 |
| Weight aft. drying | 3.20 | 3.22 | 3.22 | 3.20 | 3.18 | 3.20 | 3.20 | 3.21 | 3.18 | 3.19 |
| coating | 0.02 | 0.02 | 0.02 | 0.01 | 0.01 | 0.02 | 0.02 | 0.01 | 0.02 | 0.01 |

Table 3b

| Trial 6 | Coffee whitener base A & MD DE29 solution 50% ; Residence time 23sec | | | | | | | | | |
|---|---|---|---|---|---|---|---|---|---|---|
| Tablet | 1 | 2 | 3 | 4 | 5 | 6 | 7 | 8 | 9 | 10 |
| Weight g | 3.19 | 3.17 | 3.18 | 3.16 | 3.18 | 3.18 | 3.16 | 3.18 | 3.20 | 3.18 |
| Weight aft. drying | 3.20 | 3.18 | 3.19 | 3.18 | 3.19 | 3.20 | 3.18 | 3.19 | 3.21 | 3.19 |
| coating | 0.01 | 0.01 | 0.01 | 0.02 | 0.01 | 0.02 | 0.02 | 0.01 | 0.01 | 0.01 |

Table 3c

| Trial 7 | Coffee whitener base B & MD DE29 solution 50% ; Residence time 23sec | | | | | | | | | |
|---|---|---|---|---|---|---|---|---|---|---|
| Tablet | 1 | 2 | 3 | 4 | 5 | 6 | 7 | 8 | 9 | 10 |
| Weight g | 3.24 | 3.23 | 3.22 | 3.21 | 3.21 | 3.20 | 3.23 | 3.19 | 3.22 | 3.25 |
| Weight aft. drying | 3.26 | 3.24 | 3.23 | 3.23 | 3.24 | 3.23 | 3.23 | 3.20 | 3.23 | 3.26 |
| coating | 0.02 | 0.01 | 0.01 | 0.02 | 0.03 | 0.03 | 0.00 | 0.01 | 0.01 | 0.01 |

Example 2 - Friability analysis of non-dairy creamer tablet surface-treated with carbohydrate

A friability analysis of non-dairy creamer tablets surface-treated with carbohydrate prepared as in example 1, Trial 2(Table 2b) was made. As a reference a friability analysis of non-dairy creamer tablet not surface-treated with carbohydrate was also made. The results of the friability analysis are shown in Table 4 below.

Table 4

| | Whithout coating | After coating Residence time 23 sec. | After coating Residence time 60sec |
|---|---|---|---|
| Friability % | 19.7 | 8.1 | 0.4 |
| Base powder A | | | |

The friability is mainly perceived during handling the tablets i.e. by touch.

It is clear to see that the non-dairy creamer tablets not surface-treated with carbohydrate have a high friability 19.7%. This is in contrast to the non-dairy creamer tablets surface-treated with carbohydrate which has a significantly reduced friability of 8.1% and 0.4%.

Example 3 - Dissolution analysis of non-dairy creamer tablets surface-treated with carbohydrate

An analysis of dissolution properties of the non-dairy creamer tablet surface-treated with carbohydrate prepared as described below was made. This analysis was made to ensure that there is no negative effect of the surface treatment with carbohydrates on the non-dairy creamer tablet. The results are showed in Table 5 below.

Table 5

| **Dissolution tests** | | | | |
|---|---|---|---|---|
| **Coating:** | Residence time 23 sec | | Sugar solution 50% | |
| **Dissolution score: Range 0 - 5 (0= no residue, 5 less than 50% dissolveld)** | | | | |
| | | | | |
| **Base** | Before Treatment | | After treatment | |
| | *Sinking time* | *Dissolution score* | *Sinking time* | *Dissolution score* |
| | sec | | sec | |
| A | 7 | 0.5 | 6 | 0 |
| | 6 | 0.5 | 4 | 0.5 |
| B | 8 | 0 | 6 | 0 |
| | 7 | 0 | 7 | 0 |
| C | 7 | 0.5 | 5 | 0.5 |
| | 7 | 0 | 6 | 0 |

It is clear to see that the surface treatment of non-dairy creamer tablets with carbohydrate does not have a negative effect on the dissolution properties of the non-dairy creamer tablets. This is important as the non-dairy creamer tablet surface-treated with carbohydrate has applications in the beverage industry and where the dissolution rates of non-dairy creamer tablets is very important.

**Claims**

1. A method for the manufacture of a soluble non-dairy creamer tablet surface-treated with carbohydrate, the method comprising the steps of:

- providing a soluble non-dairy creamer tablet; and
- surface-treating the non-dairy creamer tablet with a concentrated carbohydrate solution to form the soluble non-dairy creamer tablet surface-treated with carbohydrate.

2. The method of claim 1, wherein the concentrated carbohydrate solution has a dry matter of at least 20%, preferably between 20 and 80%.

3. The method of any one of the above claims wherein the concentrated carbohydrate solution has a dry matter of from 40 to 80%.

4. The method of any one of the above claims wherein the concentrated carbohydrate solution comprises at least one of mono and disaccharides.

5. The method of any one of the above claims wherein the concentrated carbohydrate solution comprises at least one of glucose syrup, sucrose and maltodextrin.

6. The method of any one of the above claims wherein the concentrated carbohydrate solution further comprises functional ingredients.

7. The method of any one of the above claims wherein the functional ingredients are probiotic bacterium, probiotic bacterium, prebiotic, vitamin, enzyme, antioxidant, mineral salt, amino-acid supplement, peptide, protein, gum, carbohydrate, phytochemical, dextrose, lecithin, other trace nutrient, botanical extract, flavours, aroma, oat beta glucan or other functional fibre, creatine, carnitine, bicarbonate, citrate, caffeine or any mixture thereof.

8. The method of any one of the above claims wherein the non-dairy creamer tablet comprises any one of a whole milk powder, a skimmed milk powder, a partially skimmed milk powder, a filled milk powder, an adapted milk powder and a cream powder or any mixtures thereof.

9. The method of any one of the above claims wherein the non-dairy creamer tablet comprises additives selected from any one of a binding agent, a stabilising agent, an emulsifying agent, probiotics and a wetting agent or any mixtures thereof.

10. A soluble non-dairy creamer tablet surface-treated with carbohydrate obtainable by the method of any one of the above claims.

11. A container comprising at least one soluble non-dairy creamer tablet surface-treated with carbohydrate according to claim 7.

12. The use of a carbohydrate for reducing a friability of a soluble non-dairy creamer tablet, wherein said carbohydrate is applied to the surface of the non-dairy creamer tablet.

13. The use of claim 12 wherein the carbohydrate is a concentrated solution of carbohydrate comprising at least one of glucose syrup, sucrose and maltodextrin.

Europäisches
Patentamt

European
Patent Office

Office européen
des brevets

## EUROPEAN SEARCH REPORT

Application Number

EP 11 19 3949

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | EP 1 048 216 A1 (NESTLE SA [CH])<br>2 November 2000 (2000-11-02)<br>* paragraphs [0003], [0010] - [0012],<br>[0015], [0017] - [0022] * | 1-13 | INV.<br>A23C11/00<br>A23C11/08<br>A23L1/00 |
| A | GB 768 143 A (HENRY SECHER BROCHNER)<br>13 February 1957 (1957-02-13)<br>* page 1, lines 8-12, 52-61 *<br>* page 1, line 94 - page 2, line 3 * | 1-13 | |
| A | WO 2006/137635 A1 (PARK JOO-WHAN [KR])<br>28 December 2006 (2006-12-28)<br>* paragraphs [0013], [0015] - [0019],<br>[0032] - [0039], [0052] - [0054], [0069]<br>*<br>* claim 8 * | 1-13 | |
| A,D | EP 1 769 682 A1 (MEIJI DAIRIES CORP [JP])<br>4 April 2007 (2007-04-04)<br>* paragraphs [0001], [0010], [0016],<br>[0041], [0050] - [0051] * | 1-13 | |
| A | GB 738 755 A (APLIN AND BARRETT LTD)<br>19 October 1955 (1955-10-19)<br>* page 1, lines 22-30 *<br>* page 2, lines 48-49 * | 1-13 | TECHNICAL FIELDS SEARCHED (IPC)<br><br>A23C<br>A23L |
| A,D | WO 98/07329 A1 (NESTLE SA [CH])<br>26 February 1998 (1998-02-26)<br>* page 1, lines 3-5 *<br>* page 3, line 9 * | 1-13 | |

The present search report has been drawn up for all claims

| Place of search | Date of completion of the search | Examiner |
|---|---|---|
| Munich | 5 June 2012 | Couzy, François |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 11 19 3949

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2012

| Patent document cited in search report | | Publication date | Patent family member(s) | | Publication date |
|---|---|---|---|---|---|
| EP 1048216 | A1 | 02-11-2000 | AT | 297662 T | 15-07-2005 |
| | | | CA | 2297668 A1 | 28-10-2000 |
| | | | DE | 69925807 D1 | 21-07-2005 |
| | | | DE | 69925807 T2 | 11-05-2006 |
| | | | EP | 1048216 A1 | 02-11-2000 |
| | | | JP | 2000316470 A | 21-11-2000 |
| | | | PT | 1048216 E | 31-10-2005 |
| | | | TW | I241165 B | 11-10-2005 |
| GB 768143 | A | 13-02-1957 | NONE | | |
| WO 2006137635 | A1 | 28-12-2006 | KR | 20060061279 A | 07-06-2006 |
| | | | KR | 20060061280 A | 07-06-2006 |
| | | | KR | 20060061281 A | 07-06-2006 |
| | | | KR | 20060088129 A | 03-08-2006 |
| | | | WO | 2006071085 A1 | 06-07-2006 |
| | | | WO | 2006137634 A1 | 28-12-2006 |
| | | | WO | 2006137635 A1 | 28-12-2006 |
| | | | WO | 2006137636 A1 | 28-12-2006 |
| EP 1769682 | A1 | 04-04-2007 | AT | 521242 T | 15-09-2011 |
| | | | AU | 2005260485 A1 | 12-01-2006 |
| | | | CA | 2569911 A1 | 12-01-2006 |
| | | | CN | 1980576 A | 13-06-2007 |
| | | | DK | 1769682 T3 | 21-11-2011 |
| | | | EP | 1769682 A1 | 04-04-2007 |
| | | | ES | 2371261 T3 | 29-12-2011 |
| | | | JP | 4062357 B2 | 19-03-2008 |
| | | | KR | 20070038100 A | 09-04-2007 |
| | | | MY | 140809 A | 15-01-2010 |
| | | | NZ | 551836 A | 31-07-2008 |
| | | | US | 2008292770 A1 | 27-11-2008 |
| | | | WO | 2006004190 A1 | 12-01-2006 |
| GB 738755 | A | 19-10-1955 | NONE | | |
| WO 9807329 | A1 | 26-02-1998 | AT | 252322 T | 15-11-2003 |
| | | | AU | 733434 B2 | 17-05-2001 |
| | | | AU | 3942497 A | 06-03-1998 |
| | | | CA | 2263960 A1 | 26-02-1998 |
| | | | CN | 1233152 A | 27-10-1999 |
| | | | DE | 69725742 D1 | 27-11-2003 |
| | | | DE | 69725742 T2 | 29-07-2004 |
| | | | DK | 923301 T3 | 24-11-2003 |
| | | | EP | 0923301 A1 | 23-06-1999 |
| | | | ES | 2208945 T3 | 16-06-2004 |

EPO FORM P0459

For more details about this annex : see Official Journal of the European Patent Office, No. 12/82

**EP 2 604 124 A1**

**ANNEX TO THE EUROPEAN SEARCH REPORT
ON EUROPEAN PATENT APPLICATION NO.**

EP 11 19 3949

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2012

| Patent document cited in search report | Publication date | Patent family member(s) | Publication date |
|---|---|---|---|
| | | HK 1021927 A1 | 11-06-2004 |
| | | JP 3857732 B2 | 13-12-2006 |
| | | JP 2000516096 A | 05-12-2000 |
| | | PT 923301 E | 30-01-2004 |
| | | US 6287616 B1 | 11-09-2001 |
| | | WO 9807329 A1 | 26-02-1998 |

EPO FORM P0459

For more details about this annex : see Official Journal of the European Patent Office, No. 12/82

**EP 2 604 124 A1**

**REFERENCES CITED IN THE DESCRIPTION**

**Patent documents cited in the description**

- EP 1048216 A
- EP 1769682 A
- WO 2007077970 A
- EP 0169319 A
- WO 9807329 A1
- WO 2010040727 A1